# FASCICULE DE BREVET EUROPEEN

(11) **EP 1 308 814 B1**
(45) Date de publication et mention de la délivrance du brevet: **03.05.2006**
(21) Numéro de dépôt: 02292284.3
(22) Date de dépôt: 18.09.2002
(51) Int. Cl.: G05D 1/08, G05D 1/00

(54) **Dispositif et système de pilotage automatique d'un hélicoptère**
Autopilotvorrichtung und -system eines Hubschraubers
Helicopter autopilot device and system

(30) Priorité: 05.10.2001 FR 0112828
(43) Date de publication de la demande: 07.05.2003
(73) Titulaire: EUROCOPTER, 13725 Marignane Cédex (FR)
(72) Inventeur: Salesse-Lavergne, Marc, 13011 Marseille (FR)
(74) Mandataire: Renaud-Goud, Thierry

(56) Documents cités:
- US-A- 4 129 275
- US-A- 4 628 455
- US-A- 5 738 300

## Description

La présente invention concerne un dispositif de pilotage automatique d'un hélicoptère, ainsi qu'un système de pilotage automatique comportant un tel dispositif de pilotage automatique.

On sait qu'un système de pilotage automatique d'un hélicoptère comporte généralement :
- un ensemble de capteurs pour déterminer automatiquement les valeurs effectives de paramètres d'état de l'hélicoptère ;
- des moyens de réglage permettant à un opérateur de l'hélicoptère de choisir des valeurs de consigne de paramètres d'état ;
- un ensemble d'actionneurs qui agissent sur des axes de pilotage de l'hélicoptère, selon des ordres de commande ; et
- un dispositif de pilotage automatique qui détermine automatiquement des ordres de commande desdits actionneurs, en fonction des paramètres d'état et des valeurs de consigne, reçus respectivement desdits capteurs et desdits moyens de réglage.

Le système de pilotage automatique a pour mission d'aider, voire de remplacer totalement, le pilote dans la conduite de l'hélicoptère. A cet effet, il est capable d'asservir un ou plusieurs paramètres d'état de l'hélicoptère, tels que l'altitude, l'assiette ou la vitesse par exemple, sur une ou plusieurs valeurs de consigne préalablement choisies par le pilote.

On connaît, par le document US 5738300, un dispositif d'aide au pilotage automatique d'un aéronef à voilure tournante. Ce dernier est destiné à maintenir égales à des valeurs de consigne les composantes horizontales, c'est-à-dire longitudinale et latérale, de la vitesse air.

Par ailleurs, un dispositif de pilotage automatique agit de façon connue :
- sur les axes cycliques (axe de tangage, axe de roulis) et en général sur l'axe de lacet. On parle, dans ce cas, de pilotage automatique à « trois axes » ; et
- éventuellement, également sur l'axe collectif. On parle alors de pilotage automatique à "quatre axes".

On sait que les deux chaînes de pas cycliques (axe de tangage, axe de roulis) produisent une variation cyclique de l'incidence des pales, les pales ayant alors des incidences variables en fonction de leur azimut. Il en résulte un basculement du rotor principal d'avance et de sustentation de l'hélicoptère, vers l'avant (tangage) ou sur le côté (roulis), ou bien une combinaison de ces deux mouvements.

En configuration "trois axes" (tangage, roulis, lacet), un mode à objectifs de vitesse longitudinale et un mode à objectifs verticaux ne peuvent pas être engagés simultanément, car ils sont basés tous les deux sur le pilotage en tangage, qui ne peut contrôler qu'un seul paramètre à la fois. En effet, c'est l'axe de tangage qui, en contrôlant le basculement du disque rotor vers l'avant, permet de piloter :
- soit un objectif horizontal (vitesse air par exemple), grâce à la composante horizontale de la résultante aérodynamique du disque rotor (du rotor principal d'avance et de sustentation de l'hélicoptère) ;
- soit un objectif vertical (vitesse verticale par exemple), grâce à la composante verticale de la résultante aérodynamique dudit disque rotor.

Dans les deux cas, la puissance nécessaire au vol est, quant à elle, régie manuellement par le pilote, au moyen de l'axe collectif. Dans un dispositif de pilotage automatique usuel à "trois axes", dont un mode vertical est piloté en tangage, c'est donc le pilote de l'hélicoptère qui doit gérer personnellement la puissance nécessaire au vol. Or, une gestion imparfaite peut conduire dans ce cas :
- à une puissance insuffisante, qui se traduit par une diminution dangereuse de la vitesse air (puisque la puissance est utilisée en priorité pour maintenir la consigne du mode vertical) qui peut devenir incompatible avec la poursuite du vol ; et
- à une puissance excessive, qui se traduit par un accroissement de la vitesse air, pouvant aller jusqu'à dépasser la vitesse maximale autorisée et provoquer ainsi un endommagement de l'hélicoptère.

La présente invention a pour objet de remédier à ces inconvénients. Elle concerne un dispositif de pilotage automatique présentant une sécurité accrue dans un mode totalement automatique (sans intervention d'un pilote), en maintenant l'hélicoptère dans une enveloppe de vol toujours sûre.

A cet effet, selon l'invention, ledit dispositif de pilotage automatique comportant au moins une première loi à objectif qui correspond à une loi à objectif vertical pour l'axe de tangage, une telle loi à objectif ayant pour but d'amener au moins un paramètre d'état de l'hélicoptère à un objectif qui représente une valeur de consigne d'un paramètre d'état, ladite loi à objectif pour l'axe de tangage déterminant à cet effet automatiquement un ordre de commande pour contrôler le basculement du disque dudit rotor principal de l'hélicoptère,
est remarquable en ce qu'il comporte de plus, pour l'axe de tangage :
- au moins une seconde loi à objectif qui correspond à une loi de limitation de vitesse qui est destinée à limiter la vitesse air de l'hélicoptère par rapport à au moins une valeur limite ;
- des moyens de détection pour détecter automatiquement l'atteinte par la vitesse air de ladite valeur limite ; et
- des moyens de basculement pour, afin de sélectionner la loi à objectif dont l'ordre de commande est utilisé pour l'axe de tangage, basculer automatiquement de ladite première loi à ladite seconde loi, lorsque lesdits moyens de détection détectent que la vitesse air a atteint ladite valeur limite.

Ainsi, grâce à l'invention, lorsqu'une valeur limite de vitesse air est atteinte, ladite seconde loi qui est destinée à limiter la vitesse air est automatiquement engagée, ce qui permet de rester en pilotage automatique (sans intervention humaine) et donc de remédier aux inconvénients précités, tout en maintenant la vitesse air de l'hélicoptère dans un domaine de vitesses autorisé. Bien entendu, lorsque la vitesse air s'écarte de nouveau de la valeur limite, on revient automatiquement à la situation initiale (prise en compte de la loi à objectif vertical).

On notera que, dans le cadre de la présente invention, une loi à objectif est un moyen de calcul qui détermine un ordre de commande particulier permettant d'amener ou de ramener au moins un paramètre d'état de l'hélicoptère à un objectif (qui représente une valeur de consigne de ce paramètre d'état ou d'un autre paramètre d'état). De plus, une loi à objectif pour l'axe de tangage détermine, automatiquement, à cet effet, un ordre de commande pour contrôler le basculement du disque du rotor principal de l'hélicoptère.

Dans le cadre de la présente invention, ladite valeur limite de la vitesse air peut être :
- soit une vitesse air maximale autorisée ;
- soit une vitesse air minimale autorisée.

Toutefois, dans un mode de réalisation préféré, lesdits moyens de détection comparent la vitesse air (de préférence indirectement) par rapport à deux valeurs limites (supérieure et inférieure), à savoir la vitesse air maximale autorisée et la vitesse air minimale autorisée, et ladite seconde loi est une loi de protection de l'enveloppe de vitesse air, qui protège donc à la fois contre les basses vitesses et contre les vitesses élevées.

Les caractéristiques précitées de l'invention concernent le cas où le pilotage de l'axe collectif n'est pas accessible au dispositif de pilotage automatique (pilotage automatique à "trois axes").

Dans le cas où le pilotage de l'axe collectif est également accessible au dispositif de pilotage automatique (pilotage automatique à "quatre axes"), ledit dispositif de pilotage automatique comporte de plus, selon l'invention :
- au moins une loi à objectif qui correspond à une loi à objectif vertical pour l'axe collectif, cette loi à objectif vertical déterminant automatiquement un ordre de commande pour contrôler le pas collectif des pales dudit rotor principal ; et
- des moyens de sélection qui sélectionnent automatiquement ladite loi à objectif vertical, afin d'utiliser l'ordre de commande correspondant pour l'axe collectif, lorsque lesdits moyens de détection détectent que la vitesse air a atteint ladite valeur limite.

Ainsi, grâce à l'invention, l'objectif vertical est réalisé automatiquement par l'intermédiaire de l'axe collectif (dans cette configuration) lorsque la loi de limitation de vitesse est active sur l'axe de tangage.

Par ailleurs, dans un mode de réalisation particulier, ledit dispositif de pilotage automatique comporte, de plus, une loi de maintien en palier, des moyens de détection pour détecter automatiquement des conditions de mise en palier, et des moyens de sélection pour sélectionner automatiquement ladite loi de maintien en palier lorsque lesdits moyens de détection détectent des conditions de mise en palier, et ceci quelle que soit la loi à objectif qui est initialement sélectionnée.

La présente invention concerne également un système de pilotage automatique d'un hélicoptère, du type décrit précédemment.

Selon l'invention, ce système de pilotage automatique est remarquable en ce qu'il comporte le dispositif de pilotage automatique précité.

Les figures du dessin annexé feront bien comprendre comme l'invention peut être réalisée. Sur ces figures, des références identiques désignent des éléments semblables.

La figure 1 est le schéma synoptique d'un système de pilotage automatique conforme à l'invention.

La figure 2 est le schéma synoptique d'un mode de réalisation de base d'un dispositif de pilotage automatique conforme à l'invention.

La figure 3 montre schématiquement une particularité avantageuse du dispositif conforme à la présente invention.

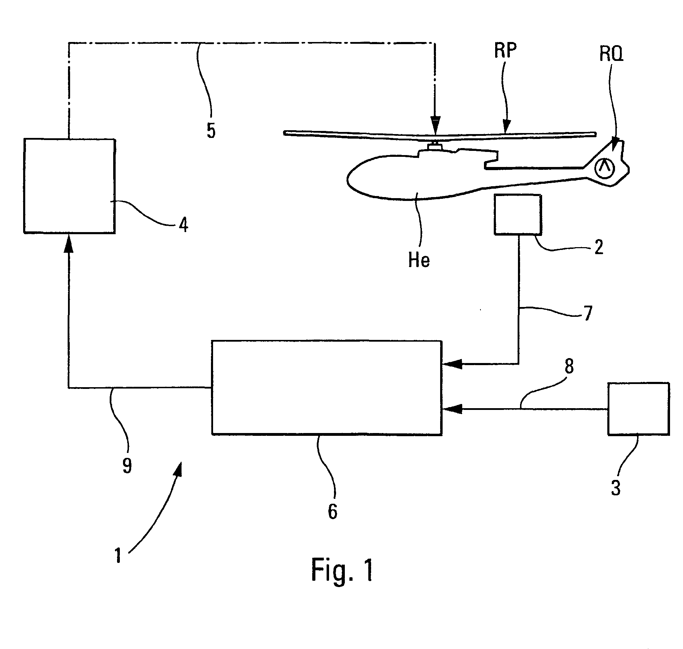

Le système de pilotage automatique 1 conforme à l'invention et représenté schématiquement sur la figure 1 est monté à bord d'un hélicoptère He à piloter automatiquement, bien que pour des raisons de clarté du dessin, l'hélicoptère He soit représenté à petite échelle, extérieurement audit système de pilotage automatique 1, sur cette figure 1. Dans l'exemple représenté, l'hélicoptère He comporte un rotor principal RP destiné à assurer la sustentation et l'avance, ainsi qu'un rotor de queue RQ, destiné à assurer l'équilibre et la commande en lacet de l'hélicoptère He.

Ledit système de pilotage automatique 1 comporte de façon usuelle :
- un ensemble de capteurs 2 usuels, pour déterminer (en particulier mesurer) automatiquement les valeurs effectives de paramètres d'état, tels que l'altitude, la hauteur, la vitesse verticale, l'assiette, l'accélération, la vitesse angulaire, la vitesse sol ou la vitesse air de l'hélicoptère He par exemple ;
- des moyens de réglage 3 usuels, permettant à un opérateur de l'hélicoptère, notamment un pilote, de choisir des valeurs de consigne de paramètres d'état, tels que l'altitude, la hauteur, la vitesse verticale, la distance, la vitesse air ou l'accélération de l'hélicoptère He notamment ;
- un ensemble d'actionneurs 4 usuels, qui agissent sur des axes de pilotage de l'hélicoptère He, comme illustré par une ligne 5 en traits interrompus, selon des ordres de commande ; et
- un dispositif de pilotage automatique 6 qui détermine automatiquement des ordres de commande desdits actionneurs 4, en fonction des paramètres d'état et des valeurs de consigne reçus respectivement dudit ensemble de capteurs 2 et desdits moyens de réglage 3, par l'intermédiaire de liaisons 7 et 8, et qui transmet (liaison 9) automatiquement ces ordres de commande auxdits actionneurs 4, par l'intermédiaire d'un étage d'adaptation (non représenté) qui a pour but de mettre en forme les signaux de commande destinés aux actionneurs 4 et d'assurer la stabilité à court terme de l'hélicoptère He.

Selon l'invention, ledit dispositif de pilotage automatique 6 agit au moins sur les axes cycliques (axe de tangage et axe de roulis) et sur l'axe de lacet de l'hélicoptère He. C'est pourquoi, on parle de pilotage automatique à "trois axes". Toutefois, seul l'axe de tangage est pris en compte dans le cadre de la présente invention, pour cette configuration à "trois axes".

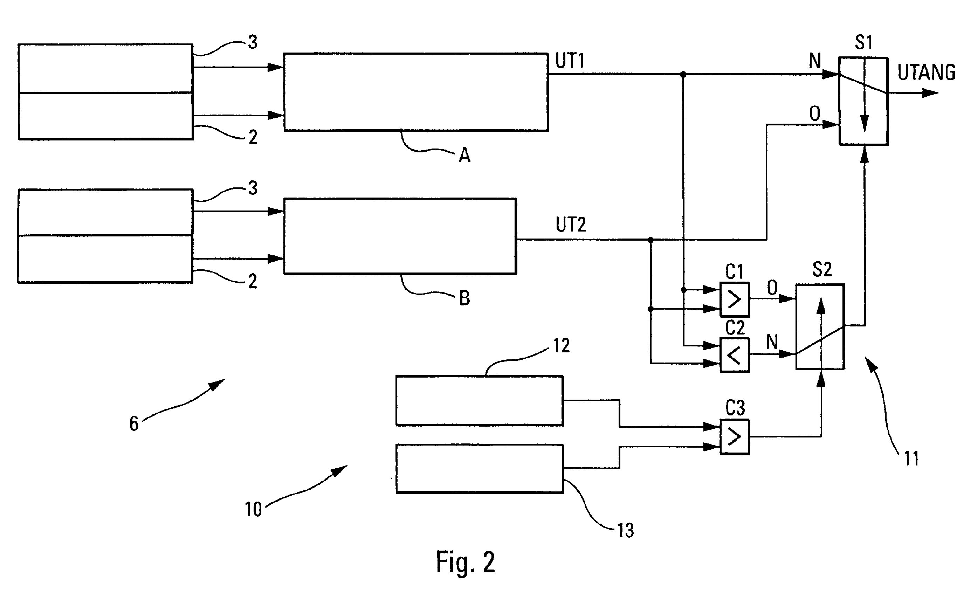

Ledit dispositif de pilotage automatique 6 comporte, comme représenté sur la figure 2, au moins une première loi à objectif qui correspond à une loi à objectif vertical A, pour l'axe de tangage.

On sait qu'une telle loi à objectif est un moyen de calcul qui a pour but d'amener au moins un paramètre d'état de l'hélicoptère He à un objectif qui représente une valeur de consigne d'un (le même ou un autre) paramètre d'état. A cet effet, ladite loi à objectif détermine, automatiquement, un ordre de commande UTANG pour contrôler le basculement du disque dudit rotor principal RP de l'hélicoptère He.

De façon connue, une telle loi à objectif vertical A utilise de préférence :
- comme paramètres d'état mesurés par l'ensemble de capteurs 2 : l'altitude, la hauteur, la vitesse verticale, l'accélération verticale, l'assiette et/ou les vitesses angulaires ; et
- comme valeurs de consigne qui sont fixées par le pilote par l'intermédiaire des moyens de réglage 3 : l'altitude, la hauteur, la vitesse verticale et/ou l'accélération verticale par exemple.

A partir de ces informations, cette loi A détermine, de façon connue, un ordre de commande UT1 permettant de réaliser un objectif vertical prédéterminé tel que l'acquisition et le maintien d'une altitude barométrique, d'une vitesse verticale, d'une pente en approche ou d'une hauteur "radiosonde" par exemple.

Selon l'invention, ledit dispositif de pilotage automatique 6 conforme à l'invention comporte de plus :
- au moins une seconde loi à objectif B qui correspond à une loi B de limitation de vitesse et qui est destinée à limiter la vitesse air de l'hélicoptère He par rapport à au moins une valeur limite. Dans l'exemple représenté sur la figure 2, cette loi B est une loi de protection d'enveloppe de vitesse air qui est destinée à limiter la vitesse air de l'hélicoptère He par rapport à deux valeurs limites (supérieure et inférieure), à savoir la vitesse air maximale autorisée et la vitesse air minimale autorisée. Pour ce faire, cette loi B détermine un ordre de commande UT2 à partir de paramètres d'état (vitesse air, accélération, assiette, vitesses angulaires) reçus de l'ensemble de capteurs 2 et de valeurs de consigne (vitesse de montée optimale, vitesse minimale autorisée, accélération nulle) reçues des moyens de réglage 3 ;
- des moyens de détection 10 pour détecter automatiquement l'atteinte ou même le dépassement d'une desdites valeurs limites par la vitesse air ; et
- des moyens de basculement 11 pour, afin de sélectionner la loi à objectif A, B dont l'ordre de commande UT1, UT2 doit être utilisé pour l'axe de tangage, basculer automatiquement de ladite première loi A vers ladite seconde loi B, lorsque lesdits moyens de détection 10 détectent que la vitesse air a atteint (ou dépassé) l'une de ses valeurs limites, et inversement.

Ainsi, grâce à l'invention, lorsqu'une valeur limite de la vitesse air (c'est-à-dire de la vitesse de l'hélicoptère He par rapport à l'air) est atteinte, la loi B de protection d'enveloppe de vitesse air est automatiquement enclenchée pour commander l'axe de tangage de manière à obtenir une protection efficace à l'encontre du dépassement de la plage de vitesses autorisée.

Selon l'invention, lesdits moyens de détection 10 comportent, dans un mode de réalisation préféré :
- un moyen de calcul 12 pour calculer la moyenne entre la vitesse maximale autorisée et la vitesse minimale autorisée ;
- un moyen 13 pour déterminer la vitesse air effective de l'hélicoptère He ; et
- un comparateur C3 qui compare, entre elles, les valeurs reçues desdits moyens 12 et 13. Ce comparateur C3 compare donc (indirectement) la vitesse air par rapport auxdites vitesses minimale et maximale autorisées.

En outre, lesdits moyens de basculement 11 comportent :
- un comparateur C1 qui compare la valeur UT1 élaborée par la loi A à la valeur UT2 élaborée par la loi B ;
- un comparateur C2 qui compare également la valeur UT1 de la loi A avec la valeur UT2 de la loi B ;
- un sélecteur S2 qui reçoit à ses entrées les informations disponibles aux sorties des comparateurs C1 et C2 et qui est commandé par le comparateur C3 ; et
- un sélecteur S1 qui reçoit à ses entrées les ordres UT1 et UT2 et qui est commandé par le sélecteur S2.

On notera que, dans le cadre de la présente invention, un comparateur tel que C1 et C3, qui comporte le signe ">", signifie que, si une valeur α est amenée à l'entrée supérieure et une valeur β est amenée à l'entrée inférieure, la sortie prend la réponse :
- O (oui), si α > β ; et
- N (non), si α ≤ β.

En revanche, un comparateur tel que le comparateur C2, qui comporte un signe "<", signifie que, si on amène une valeur γ à l'entrée supérieure et une valeur δ à l'entrée inférieure, la sortie prend la réponse :
- O (oui) si γ < δ ; et
- N (non) si γ ≥ δ.

Les lettres O et N sur les figures 2 à 3 correspondent à ces situations (oui et non).

Par ailleurs, dans le cadre de la présente invention, tout sélecteur tel que les sélecteurs S1, S2 et S3 par exemple, relie sa sortie à l'une des entrées O (oui) ou N (non), en fonction de sa commande.

Les caractéristiques précitées de l'invention concernent le cas où le pilotage de l'axe collectif n'est pas accessible au dispositif de pilotage automatique 6 (pilotage automatique à "trois axes").

Dans le cas où le pilotage de l'axe collectif est également accessible audit dispositif de pilotage automatique (pilotage automatique à "quatre axes"), ledit dispositif de pilotage automatique 6 comporte de plus, dans un mode de réalisation particulier non représenté :
- au moins une loi à objectif qui correspond à une loi à objectif vertical pour l'axe collectif, cette loi à objectif vertical déterminant automatiquement un ordre de commande pour contrôler le pas collectif des pales dudit rotor principal RP ; et
- des moyens de sélection qui sélectionnent automatiquement ladite loi à objectif vertical, afin d'utiliser l'ordre de commande correspondant pour l'axe collectif, lorsque lesdits moyens de détection 10 détectent que la vitesse air a atteint l'une desdites valeurs limites.

Ainsi, dans ce mode de réalisation particulier, l'objectif vertical est réalisé automatiquement par l'intermédiaire de l'axe collectif, tandis que la vitesse air est maintenue sur sa limite par une loi à objectif de vitesse air en tangage. Aucune intervention du pilote n'est donc nécessaire pour cela.

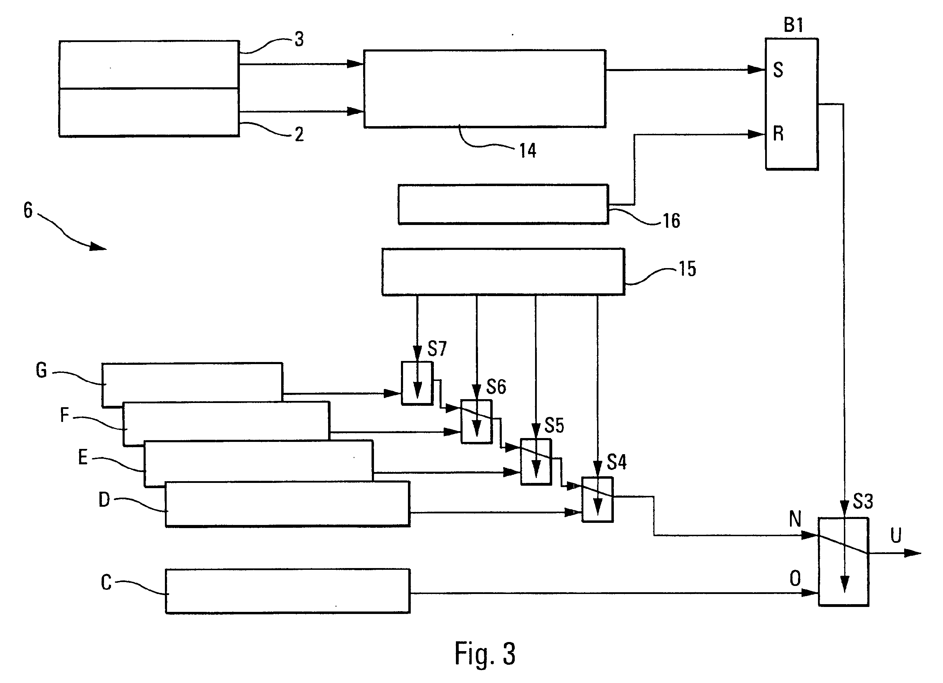

Par ailleurs, dans un mode de réalisation particulier représenté sur la figure 3, le dispositif de pilotage automatique 6 conforme à l'invention comporte des moyens 14 de détection de conditions de mise en palier. Les moyens 14 ont pour fonction de comparer des paramètres d'état verticaux, tels que l'altitude, la hauteur, la vitesse verticale et l'accélération verticale, à des valeurs de consigne correspondant à la mise en palier, pour détecter le point de la trajectoire de l'hélicoptère He, à partir duquel la mise en palier doit être engagée automatiquement. Ce point de la trajectoire peut correspondre à un seuil d'altitude, à un point de tangence entre la trajectoire suivie et la trajectoire programmée de mise en palier, ou à d'autres conditions prédéfinies.

Le dispositif 6 comporte, de plus, un sélecteur S3 pour choisir entre une loi présélectionnée D, E, F, G de type usuel, et une loi C de maintien en palier. Tant que les conditions de mise en palier ne sont pas réunies, le sélecteur S3 choisit, via une cascade de sélecteurs S4, S5, S6, S7 qui sont liés respectivement auxdites lois D, E, F, G, l'ordre U issu de la loi qui est initialement engagée par un automate de gestion des modes 15 (de type usuel, qui est relié auxdits sélecteurs S4 à S7).

En revanche, lorsque les conditions de mise en palier sont détectées par les moyens 14, le sélecteur S6 sélectionne la loi de maintien en palier C. Selon l'invention, ce basculement automatique est réalisé quelle que soit la loi D, E, F, G initialement engagée (par exemple une loi "GLIDE/SLOPE", une loi de vitesse verticale, d'acquisition d'altitude ou de vitesse air, ...), grâce à la cascade de sélecteurs S4 à S7.

Le maintien de l'hélicoptère He en palier est réalisé à une hauteur de sécurité réglable.

Comme on peut le voir sur la figure 3, les moyens 14 sont reliés au sélecteur S3 par l'intermédiaire d'une bascule B1 qui permet de revenir aux conditions initiales antérieures au basculement sur la loi C. Pour ce faire, l'entrée R de cette bascule B1 (dont l'entrée S est reliée aux moyens 14) est reliée à un élément de détection 16 qui détecte des conditions (désengagement de mode, intervention du pilote sur les commandes ou changement de consigne par exemple) pour réaliser un tel retour à la situation initiale. Ladite bascule B1 est du type connu R/S qui est tel que, lorsque l'entrée S est positionnée, la sortie est à 1, jusqu'à ce que l'entrée R passe à 1.

## Revendications

1. Dispositif de pilotage automatique d'un hélicoptère (He) comprenant un rotor principal (RP) d'avance et de sustentation et susceptible d'être piloté au moins selon un axe de tangage, ledit dispositif (6) comportant pour l'axe de tangage au moins une première loi à objectif (A) qui correspond à une loi à objectif vertical (A), une telle loi à objectif (A, B) ayant pour but d'amener au moins un paramètre d'état de l'hélicoptère (He) à un objectif qui représente une valeur de consigne d'un paramètre d'état, ladite loi à objectif (A, B) pour l'axe de tangage déterminant à cet effet automatiquement un ordre de commande (UT1, UT2) pour contrôler le basculement du disque dudit rotor principal (RP) de l'hélicoptère (He), **caractérisé en ce qu'**il comporte de plus, pour l'axe de tangage :
- au moins une seconde loi à objectif (B) qui correspond à une loi de limitation de vitesse (B) qui est destinée à limiter la vitesse air de l'hélicoptère (He) par rapport à au moins une valeur limite ;
- des moyens de détection (10) pour détecter automatiquement l'atteinte par la vitesse air de ladite valeur limite ; et
- des moyens de basculement (11) pour, afin de sélectionner la loi à objectif (A, B) dont l'ordre de commande (UT1, UT2) est utilisé pour l'axe de tangage, basculer automatiquement de ladite première loi (A) à ladite seconde loi (B), lorsque lesdits moyens de détection (10) détectent que la vitesse air a atteint ladite valeur limite.

2. Dispositif selon la revendication 1,
**caractérisé en ce que** ladite valeur limite est une vitesse air maximale autorisée.

3. Dispositif selon l'une des revendications 1 et 2,
**caractérisé en ce que** ladite valeur limite est une vitesse air minimale autorisée.

4. Dispositif selon l'une quelconque des revendications 1 à 3,
**caractérisé en ce que** lesdits moyens de détection (10) comparent la vitesse air par rapport à deux valeurs limites, une vitesse air maximale autorisée et une vitesse air minimale autorisée, et **en ce que** ladite seconde loi (B) est une loi de protection de l'enveloppe de vitesse air.

5. Dispositif selon l'une quelconque des revendications précédentes,
**caractérisé en ce qu'**il comporte, de plus :
- au moins une loi à objectif qui correspond à une loi à objectif vertical pour l'axe collectif, cette loi à objectif vertical déterminant automatiquement un ordre de commande pour contrôler le pas collectif des pales du rotor principal (RP) de l'hélicoptère (He) ; et
- des moyens de sélection qui sélectionnent automatiquement ladite loi à objectif vertical, afin d'utiliser l'ordre de commande correspondant pour l'axe collectif, lorsque lesdits moyens de détection (10) détectent que la vitesse air a atteint ladite valeur limite.

6. Dispositif selon l'une quelconque des revendications précédentes,
**caractérisé en ce qu'**il comporte, de plus, une loi de maintien en palier (C), des moyens de détection (14) pour détecter automatiquement des conditions de mise en palier, et des moyens de sélection (S3) pour sélectionner automatiquement ladite loi de maintien en palier (C) lorsque lesdits moyens de détection (14) détectent des conditions de mise en palier, et ceci quelle que soit la loi à objectif (D, E, F, G) qui est initialement sélectionnée.

7. Système de pilotage automatique d'un hélicoptère, ledit système (1) comprenant :
- un ensemble de capteurs (2) pour déterminer automatiquement les valeurs effectives de paramètres d'état de l'hélicoptère (He) ;
- des moyens de réglage (3) permettant à un opérateur de l'hélicoptère (He) de choisir des valeurs de consigne de paramètres d'état ;
- une ensemble d'actionneurs (4) qui agissent sur des axes de pilotage de l'hélicoptère (He), selon des ordres de commande ; et
- un dispositif de pilotage automatique (6) qui détermine automatiquement des ordres de commande desdits actionneurs (4), en fonction des paramètres d'état et des valeurs de consigne, reçus respectivement desdits capteurs (2) et desdits moyens de réglage (3),
**caractérisé en ce que** ledit dispositif de pilotage automatique (6) est du type de celui spécifié sous l'une quelconque des revendications 1 à 6.

## Patentansprüche

1. Autopilot-Vorrichtung für einen Hubschrauber (He), der einen Vorschub- und Auftriebs-Hauptrotor (RP) aufweist, der mindestens gemäß einer Nickachse gesteuert werden kann, wobei die Vorrichtung (6) für die Nickachse mindestens ein erstes Richtwert-Gesetz (A) aufweist, das einem vertikalen Richtwert-Gesetz (A) entspricht, wobei ein solches Richtwert-Gesetz (A, B) zum Ziel hat, mindestens einen Zustandsparameter des Hubschraubers (He) auf einen Richtwert zu bringen, der einen Sollwert eines Zustandsparameters darstellt, wobei das Richtwert-Gesetz (A, B) für die Nickachse zu diesem Zweck automatisch einen Steuerbefehl (UT1, UT2) bestimmt, um das Kippen der Scheibe des Hauptrotors (RP) des Hubschraubers (He) zu überwachen, **dadurch gekennzeichnet, dass** sie außerdem für die Nickachse aufweist:
- mindestens ein zweites Richtwert-Gesetz (B), das einem Geschwindigkeitsbegrenzungsgesetz (B) entspricht, das dazu bestimmt ist, die Luftgeschwindigkeit des Hubschraubers (He) bezüglich mindestens eines Grenzwerts zu begrenzen;
- Erfassungsmittel (10), um automatisch das Erreichen des Grenzwerts durch die Luftgeschwindigkeit zu erfassen; und
- Kippmittel (11), um zur Auswahl des Richtwert-Gesetzes (A, B), dessen Steuerbefehl (UT1, UT2) für die Nickachse verwendet wird, automatisch vom ersten Gesetz (A) zum zweiten Gesetz (B) zu kippen, wenn die Erfassungsmittel (10) erfassen, dass die Luftgeschwindigkeit den Grenzwert erreicht hat.

2. Vorrichtung nach Anspruch 1, **dadurch gekennzeichnet, dass** der Grenzwert eine maximale genehmigte Luftgeschwindigkeit ist.

3. Vorrichtung nach einem der Ansprüche 1 und 2, **dadurch gekennzeichnet, dass** der Grenzwert eine minimale genehmigte Luftgeschwindigkeit ist.

4. Vorrichtung nach einem der Ansprüche 1 bis 3, **dadurch gekennzeichnet, dass** die Erfassungsmittel (10) die Luftgeschwindigkeit mit zwei Grenzwerten vergleichen, einer maximalen genehmigten Luftgeschwindigkeit und einer minimalen genehmigten Luftgeschwindigkeit, und dass das zweite Gesetz (B) ein Gesetz zum Schutz der Luftgeschwindigkeits-Hüllkurve ist.

5. Vorrichtung nach einem der vorhergehenden Ansprüche, **dadurch gekennzeichnet, dass** sie außerdem aufweist:
- mindestens ein Richtwert-Gesetz, das einem vertikalen Richtwert-Gesetz für die kollektive Achse entspricht, wobei dieses vertikale Richtwert-Gesetz automatisch einen Steuerbefehl bestimmt, um den kollektiven Blatteinstellwinkel der Blätter des Hauptrotors (RP) des Hubschraubers zu überwachen; und
- Auswahlmittel, die automatisch das vertikale Richtwert-Gesetz auswählen, um den entsprechenden Steuerbefehl für die kollektive Achse zu verwenden, wenn die Erfassungsmittel (10) erfassen, dass die Luftgeschwindigkeit den Grenzwert erreicht hat.

6. Vorrichtung nach einem der vorhergehenden Ansprüche, **dadurch gekennzeichnet, dass** sie außerdem ein Gesetz des Haltens im Horizontalflug (C), Erfassungsmittel (14), um automatisch Bedingungen des Übergangs in den Horizontalflug zu erfassen, und Auswahlmittel (S3) aufweist, um automatisch das Gesetz des Haltens im Horizontalflug (C) auszuwählen, wenn die Erfassungsmittel Bedingungen des Übergangs in den Horizontalflug erfassen, und dies unabhängig vom Richtwert-Gesetz (D, E, F, G), das ursprünglich ausgewählt wird.

7. Autopilot-System eines Hubschraubers, wobei das System (1) aufweist:
- eine Gruppe von Sensoren (2), um automatisch die tatsächlichen Werte von Zustandsparametern des Hubschraubers (He) zu bestimmen;
- Einstellmittel (3), die es einem Bediener des Hubschraubers (He) ermöglichen, Sollwerte von Zustandsparametern zu wählen;
- eine Gruppe von Stellgliedern (4), die auf Steuerachsen des Hubschraubers (He) gemäß Steuerbefehlen einwirken; und
- eine Autopilot-Vorrichtung (6), die automatisch Steuerbefehle der Stellglieder (4) in Abhängigkeit von den Zustandsparametern und den Sollwerten bestimmt, die von den Sensoren (2) bzw. den Einstellmitteln (3) empfangen werden,
**dadurch gekennzeichnet, dass** die Autopilot-Vorrichtung (6) von der in einem der Ansprüche 1 bis 6 spezifizierten Art ist.

## Claims

1. A device for automatic piloting of a helicopter (He), comprising a principal rotor (RP) for thrust and lift, which is capable of being piloted at least along an axis of pitch, the said device (6) including, for the axis of pitch, at least a first target rule (A) which corresponds to a vertical target rule (A), a target rule (A, B) of this kind having the purpose of bringing at least one status parameter of the helicopter (He) to a target representing a set value of a status parameter, the said target rule (A, B) for the axis of pitch to this end automatically determining a control order (UT1, UT2) for controlling tilting of the plate of the said principal rotor (RP) of the helicopter (He),
**characterised in that** it further includes, for the axis of pitch:
- at least a second target rule (B) which corresponds to a speed limiting rule (B) which is intended to limit the air speed of the helicopter (He) in relation to at least one limit value;
- detection means (10) for automatically detecting the fact that the air speed has reached the said limit value; and
- flip means (11), in order to select the target rule (A, B) whereof the control order (UT1, UT2) is used for the axis of pitch, for flipping automatically from the said first rule (A) to the said second rule (B) when the said detection means (10) detect the fact that the air speed has reached the said limit value.

2. A device according to Claim 1,
**characterised in that** the said limit value is a maximum permitted air speed.

3. A device according to either of Claims 1 and 2,
**characterised in that** the said limit value is a minimum permitted air speed.

4. A device according to any one of Claims 1 to 3,
**characterised in that** the said detection means (10) compare the air speed to two limit values, a maximum permitted air speed and a minimum permitted air speed, and **in that** the said second rule (B) is a rule for protecting the air speed envelope.

5. A device according to any one of the preceding claims,
**characterised in that** it further includes:
- at least one target rule which corresponds to a vertical target rule for the collective axis, this vertical target rule automatically determining a control order for controlling the collective pitch of the blades of the principal rotor (RP) of the helicopter (He); and
- selection means which automatically select the said vertical target rule in order to use the corresponding control order for the collective axis, when the said detection means (10) detect the fact that the air speed has reached the said limit value.

6. A device according to any one of the preceding claims,
**characterised in that** it further includes a rule for keeping level (C), detection means (14) for automatically detecting conditions for bringing level, and selection means (S3) for automatically selecting the said rule for keeping level (C) when the said detection means (14) detect the conditions for bringing level, whatever the target rule (D, E, F, G) which is initially selected.

7. A system for automatic piloting of a helicopter, the said system (1) comprising:
- a set of sensors (2) for automatically determining the actual values of status parameters of the helicopter (He);
- regulating means (3) allowing a person operating the helicopter (He) to choose set values for the status parameters;
- a set of actuators (4) which act on the axes of piloting the helicopter (He) in accordance with control orders; and
- an automatic piloting device (6) which automatically determines control orders for the said actuators (4) as a function of the status parameters and set values which are received from the said sensors (2) and the said regulating means (3) respectively,
**characterised in that** the said automatic piloting device (6) is of the type specified in any one of Claims 1 to 6.
